# EUROPÄISCHE PATENTANMELDUNG

(11) **EP 1 008 508 A2**
(43) Veröffentlichungstag der Anmeldung: **14.06.2000**
(21) Anmeldenummer: 99124671.1
(22) Anmeldetag: 10.12.1999
(51) Int. Cl.: B62D 11/04

(54) **Lenksystem für ein Flurförderzeug**

(30) Priorität: 11.12.1998 DE 19857373
(71) Anmelder: FIAT OM CARRELLI ELEVATORI S.p.A., 20141 Milano (IT)
(72) Erfinder: Bersani, Fabio, 20089 Rozzano (MI) (IT)
(74) Vertreter: Kasseckert, Rainer

(57) **Zusammenfassung**

Die Erfindung betrifft ein Lenkungssystem für ein Flurförderzeug (1), insbesondere einen Gabelstapler, mit zwei lastnahen Antriebsrädern (6, 7), denen jeweils ein elektrischer Fahrmotor (8, 9) zugeordnet ist, und mindestens einem von den Antriebsrädern (6, 7) beabstandeten lastfernen Hinterrad (10). Die Aufgabe, ein Lenkungssystem für ein Flurförderzeug zur Verfügung zu stellen, das einen geringen Bauaufwand aufweist und die Lenkungsfunktion mit geringem Energieverbrauch ermöglicht, wird erfindungsgemäß dadurch gelöst, daß das Hinterrad (10) um eine senkrechte Drehachse (11) frei drehbar gelagert ist und die Fahrmotoren (8, 9) unabhängig voneinander in Abhängigkeit der Auslenkung einer manuell betätigbaren Lenkeinrichtung (12) ansteuerbar sind. In einer Weiterbildung der Erfindung sind die Fahrmotoren (8, 9) in Abhängigkeit der Betätigungsgeschwindigkeit der manuell betätigbaren Lenkeinrichtung (12) ansteuerbar. An der Lenkeinrichtung (12) ist eine Sensoreinrichtung (13) vorgesehen ist, die mit einer die Fahrmotoren (8, 9) ansteuernden elektrischen Steuereinrichtung (15) in Wirkverbindung steht. Zur Rückmeldung der Drehzahlen der Fahrmotoren (8, 9) sind weitere zur Erfassung der Drehzahl der Fahrmotoren (8, 9) geeignete Sensoreinrichtung (18, 19) vorgesehen, die mit der elektronischen Steuereinrichtung (15) in Verbindung stehen.

## Beschreibung

Die Erfindung betrifft ein Lenkungssystem für ein Flurförderzeug, insbesondere einen Gabelstapler, mit zwei lastnahen Antriebsrädern, denen jeweils ein elektrischer Fahrmotor zugeordnet ist, und mindestens einem von den Antriebsrädern beabstandeten lastfernen Hinterrad.

Flurförderzeuge weisen in der Regel als Lenkungssystem eine hydraulische Lenkung auf, mit der das Hinterrad entsprechend der Stellung einer manuell vom Fahrer betätigbaren Lenkeinrichtung, beispielsweise einem Lenkrad, in seiner Position verstellbar wird. Bei derartigen Lenkungssystemen ergibt sich jedoch ein erheblicher Bauaufwand für das Lenkungssystem, das beispielsweise einen am Hinterrad angeordneten hydraulischer Lenkzylinder und gegebenenfalls ein am Hinterrad angeordnetes Lenkgestänge sowie ein Lenkventil an der Lenksäule aufweist.

Zudem ist bei derartigen Lenkungssystemen eine hydraulische Lenkungspumpe erforderlich, die ständig von einem Antriebsmotor angetrieben werden muß. Dadurch wird auch bei nichtbetätigter Lenkung Energie verbraucht, die vor allem bei batteriebetriebenen Elektrostaplern zu einer Verringerung der Betriebsdauer einer Batterieladung führt.

Der vorliegenden Erfindung liegt die Aufgabe zugrunde, ein Lenkungssystem für ein elektrisch betriebenes Flurförderzeug zur Verfügung zu stellen, das einen geringen Bauaufwand aufweist und die Lenkungsfunktion mit geringem Energieverbrauch ermöglicht.

Diese Aufgabe wird erfindungsgemäß dadurch gelöst, daß das Hinterrad um eine senkrechte Drehachse frei drehbar gelagert ist und die Fahrmotoren unabhängig voneinander in Abhängigkeit der Auslenkung einer manuell betätigbaren Lenkeinrichtung ansteuerbar sind. Der erfindungswesentliche Gedanke besteht somit darin, bei einem Flurförderzeug mit einem elektrischen Fahrantrieb die Lenkungsfunktion durch eine unabhängige Ansteuerung der elektrischen Fahrmotoren in den Fahrantrieb zu integrieren, wobei zur Erzielung einer Kurvenfahrt des Flurförderzeugs die Fahrmotoren mit unterschiedlichen Drehzahl betrieben werden. Das Hinterrad hat hierbei für die Lenkungsfunktion eine passive Funktion und ist um eine senkrechte Drehachse frei drehbar. Durch die manuell betätigte Lenkeinrichtung, beispielsweise ein Lenkrad, wird hierbei von einer Bedienperson eine Richtungsänderung des Flurförderzeugs vorgegeben. Die Ansteuerung der Fahrmotoren erfolgt hierbei in der Art, daß zwischen dem kurveninneren und dem kurvenäußeren Fahrmotor eine Drehzahldifferenz eingestellt wird, so daß das Flurförderzeug einen Kurvenradius beschreibt, der der gewünschten Richtungsänderung entspricht. Dadurch ergibt sich ein geringer Bauaufwand für das Flurförderzeug, da am Hinterrad keine für die Lenkungsfunktion notwendigen Bauelemente sowie keine von einem Antriebsmotor angetriebene hydraulische Lenkungspumpe erforderlich sind. Durch den Wegfall der Lenkungspumpe ergibt sich zudem ein geringer Energieverbrauch. Dadurch kann bei einem batteriebetriebenen Flurförderzeug die Betriebsdauer einer Batterieladung durch das erfindungsgemäße Lenkungssystem erhöht werden.

In einer vorteilhaften Weiterbildung der Erfindung sind die Fahrmotoren in Abhängigkeit der Betätigungsgeschwindigkeit der manuell betätigbaren Lenkeinrichtung ansteuerbar. Die durch die Ansteuerung der Fahrmotoren bewirkte Richtungsänderung des Flurförderzeugs erfolgt somit entsprechend der Betätigungsgeschwindigkeit der Lenkungseinrichtung, beispielsweise entsprechend einer Drehgeschwindigkeit eines Lenkrads. Es ist somit möglich, das Lenkverhalten des Flurförderzeugs in Abhängigkeit der von einer Bedienperson vorgegebenen Betätigungsgeschwindigkeit zu steuern. Dadurch kann auf einfache Weise in Notsituationen, beispielsweise bei plötzlich auftretenden Hindernissen und entsprechend schnellen Betätigungsgeschwindigkeiten der Lenkeinrichtung ein entsprechend schnelles Ansprechen der Lenkung und somit eine Richtungsänderung des Flurförderzeugs ermöglicht werden.

Zweckmäßigerweise ist hierbei an der Lenkeinrichtung eine Sensoreinrichtung vorgesehen, die mit einer die Fahrmotoren ansteuernden elektronischen Steuereinrichtung in Wirkverbindung steht. Die elektronische Steuereinrichtung, beispielsweise eine auf einem Mikroprozessor basierende Steuereinrichtung, die zur Ansteuerung der Fahrmotoren vorgesehen ist, errechnet aus den von der Sensoreinrichtung der Lenkeinrichtung gelieferten Signale entsprechende Ansteuersignale für die beiden Fahrmotoren, so daß die Antriebsräder bei einer Betätigung der Lenkeinrichtung mit unterschiedlichen Drehzahlen betrieben werden und das Flurförderzeug entsprechend der Auslenkung der Lenkeinrichtung eine Kurvenfahrt beschreibt.

Mit besonderem Vorteil ist die Sensoreinrichtung als ein mit der Lenkeinrichtung in Wirkverbindung stehender Drehwinkelsensor ausgebildet ist. Mit einer derartigen Sensoreinrichtung kann an einem Lenkrad oder einer mit dem Lenkrad verbundenen Lenksäule auf einfache Weise der Lenkwinkel des Lenkrads erfaßt werden.

Besondere Vorteile ergeben sich, wenn eine weitere zur Erfassung der Drehzahl der Fahrmotoren geeignete Sensoreinrichtung vorgesehen ist. Dadurch kann die Drehzahl der beiden Fahrmotoren an die elektronische Steuereinrichtung zurückgemeldet werden, wodurch die Drehzahl der Fahrmotoren durch die elektronische Steuereinrichtung geregelt werden kann.

Bei als Asynchronmotoren ausgebildeten Fahrmotoren ist es zweckmäßig, die weitere Sensoreinrichtung als jeweils einen an einem Fahrmotor angeordneten Encoder auszubilden. Mit einem beispielsweise an der Abtriebsweile eines Asynchronmotors angeordneten Encoder kann auf einfache Weise die Drehzahl der Abtriebswelle des entsprechenden Fahrmotors erfaßt werden.

In einer Ausführungsform ist die elektronische Steuereinrichtung als proportionale Steuerung ausgebildet. Dadurch kann bei einer Auslenkung der Lenkeinrichtung auf einfache Weise eine entsprechende Drehzahldifferenz an den Fahrmotoren eingestellt werden und ein der Auslenkung der Lenkeinrichtung proportionaler Kurvenradius des Flurförderzeugs eingestellt werden.

In einer weiteren Ausführungsform der Erfindung ist vorgesehen, die elektronische Steuereinrichtung als derivative Steuerung auszubilden. Mit einer derartigen Steuereinrichtung kann auf einfache Weise die Ansteuerung der Fahrmotoren in Abhängigkeit der Betätigungsgeschwindigkeit der Lenkeinrichtung ausgeführt werden.

In einer Weiterbildung der Erfindung ist vorgesehen, die elektronische Steuereinrichtung als in Abhängigkeit von der Fahrgeschwindigkeit des Flurförderzeugs arbeitende Steuereinrichtung auszubilden. Die Ansteuerung der Fahrmotoren und somit die Richtungsänderung des Flurförderzeugs erfolgt somit in Abhängigkeit der Fahrgeschwindigkeit des Flurförderzeugs. Die Steuereinrichtung kann hierbei die Ansteuerung der Fahrmotoren derart bestimmen, daß bei hoher Fahrgeschwindigkeit abrupte Richtungsänderungen vermieden werden und somit ein Seitenumkippen des Flurförderzeugs verhindert wird. Dadurch kann durch das erfindungsgemäße Lenkungssystem auf einfache Weise eine Erhöhung der Seitenstabilität während der Kurvenfahrt des Flurförderzeugs bei hohen Fahrgeschwindigkeiten erzielt werden.

In einer bevorzugten Ausführungsform der Erfindung ist die senkrechte Drehachse des Hinterrads von der horizontalen Rotationsachse des Hinterrads axial beabstandet ist. Dadurch stellt sich das Hinterrad auf einfache Weise immer tangential zu der Kurvenbahn, die durch die von der elektronischen Steuereinrichtung eingestellte Drehzahldifferenz an den Fahrmotoren vorgegeben wird.

Das erfindungsgemäße Lenkungssystem kann verwendet werden in einem Flurförderzeug in Dreiradausführung.

Zudem ist eine Verwendung eines erfindungsgemäßen Lenkungssystems in einem Flurförderzeug in Vierradausführung möglich. Dadurch kann die Manövrierfähigkeit und die Wendigkeit eines Dreiradstaplers mit der Stabilität eines Vierradstaplers kombiniert werden.

Weitere Vorteile und Einzelheiten der Erfindung werden anhand des in den schematischen Figuren dargestellten Ausführungsbeispiels näher beschrieben. Dabei zeigt
- Figur 1: einen Gabelstapler in Dreiradausführung mit einem erfindungsgemäßen Lenkungssystems,
- Figur 2: einen Gabelstapler in Vierradausführung mit einem erfindungsgemäßen Lenkungssystems und
- Figur 3: die Seitenansicht eine Hinterrades.

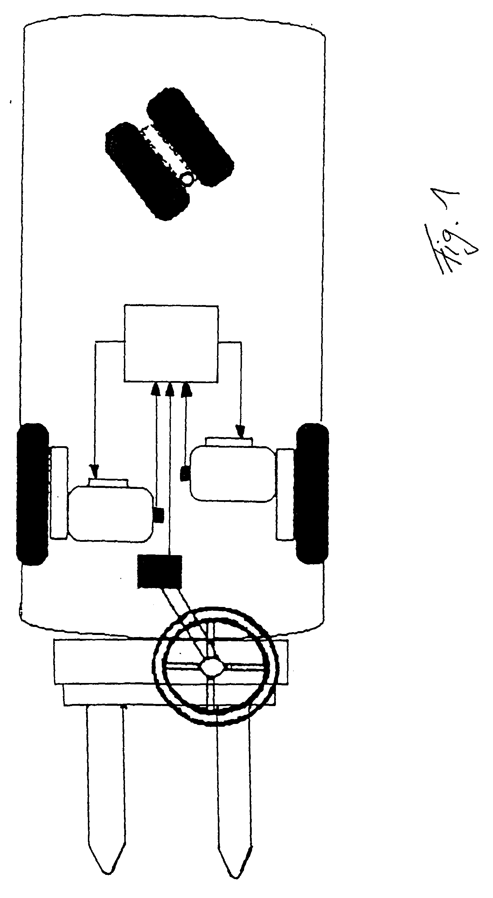

Das in der Figur 1 gezeigte Flurförderzeug 1, beispielsweise ein Gabelstapler, besteht aus einem Fahrzeugrahmen 2, an dem im vorderen Bereich ein Hubgerüst 3 mit einem Lastaufnahmemittel 4 angeordnet ist. Das Lastaufnahmemittel 4 kann beispielsweise als eine im Hubgerüst 3 höhenverstellbare Gabel 5 ausgebildet sein. In einem dem Lastaufnahmemittel 4 nahen Bereich sind zwei Antriebräder 6 und 7 vorgesehen, die jeweils mittels eines elektrischen Fahrmotors 8 und 9 antreibbar sind. Die Fahrmotoren 8, 9 können hierbei als Gleichstrommotoren oder Asynchronmotoren ausgebildet sein. In einem dem Lastaufnahmemittel 4 entfernten Bereich des Fahrzeugrahmens 2 des Flurförderzeugs 1 ist ein Hinterrad 10 angeordnet, das um eine senkrechte Drehachse 11 frei drehbar am Fahrzeugrahmen 2 befestigt ist. Zur Erhöhung der Standsicherheit kann das Hinterrad 10 als Doppelrad ausgeführt werden.

Weiterhin ist eine von einer Bedienperson manuell betätigbare Lenkeinrichtung 12 zur Vorgabe einer Fahrtrichtung des Flurförderzeugs 1 vorgesehen. Die Lenkeinrichtung 12 kann beispielsweise als Lenkrad oder als Joystick ausgebildet werden. An der Lenkeinrichtung 12 ist eine Sensoreinrichtung 13 angeordnet, mit der die Auslenkung der Lenkeinrichtung 12 erfaßbar ist. Hierzu kann beispielsweise ein Drehwinkelsensor an dem Lenkrad oder an einer mit dem Lenkrad in Wirkverbindung stehenden Lenksäule angeordnet werden. Die Sensoreinrichtung 13 steht über eine Signalleitung 14 mit einer elektronischen Steuereinrichtung 15 in Verbindung, die ausgangsseitig mittels Signalleitungen 16, 17 mit den Leistungsstellgliedern der Fahrmotoren 8 und 9 in Wirkverbindung steht. Desweiteren ist an jedem Fahrmotoren 8, 9 eine Sensoreinrichtung 18, 19 vorgesehen, mit denen die Drehzahl der Fahrmotoren 8, 9 erfaßt werden kann. Hierzu kann beispielsweise jeweils ein Encoder an einer Abtriebswelle des Fahrmotoren 8 und 9 angeordnet werden. Die Sensoreinrichtungen 18, 19 stehen über Signalleitungen 20, 21 mit der elektronischen Steuereinrichtung 15 in Verbindung, so daß ein Regelkreis zur Steuerung der Drehzahl der Fahrmotoren 8, 9 gebildet ist.

Zur Berücksichtigung der Betätigungsgeschwindigkeit der Auslenkung der Lenkeinrichtung 12 ist die elektronischen Steuereinrichtung 15 als derivative Steuerung ausgebildet. Dadurch kann die Betätigungsgeschwindigkeit der Lenkeinrichtung 12, beispielsweise die Drehgeschwindigkeit des Lenkrads, bei der Ansteuerung der Fahrmotoren 8, 9 berücksichtigt werden.

Das Lenkungssystem gemäß der Erfindung arbeitet wie folgt:

Die Bedienperson gibt durch eine Betätigung der Lenkeinrichtung 12 eine Auslenkung und eine Betätigungsgeschwindigkeit vor, wobei die Auslenkung, beispielsweise der Lenkradwinkel, mittels der Sensoreinrichtung 13 von der elektronischen Steuereinrichtung 15 erfaßt wird und die als derivate Steuerung ausgebildete elektronische Steuereinrichtung 15 aus den Sensorsignalen der Sensoreinrichtung 13 die Betätigungsgeschwindigkeit der Lenkeinrichtung 12 ermittelt. Aus der Auslenkung und der Betätigungsgeschwindigkeit errechnet die Steuereinrichtung 15 Ansteuersignale für die Fahrmotoren 8, 9, so daß eine der gewünschten Auslenkung und Betätigungsgeschwindigkeit der Lenkeinrichtung 12 entsprechende Geschwindigkeitsdifferenz zwischen dem kurvenäußeren und dem kurveninneren Antriebsrad 6, 7 durch unterschiedliche Drehzahlen an den Fahrmotoren 8, 9 eingestellt wird. Über die Sensoreinrichtungen 18, 19 wird die Drehzahl der Fahrmotoren 8, 9 an die Steuereinrichtung 15 zurückgemeldet und somit die Drehzahl der Fahrmotoren 8, 9 entsprechend dem Signal der Sensoreinrichtung 13 geregelt. Die Fahrmotoren 8, 9 weisen somit unterschiedliche Abtriebsdrehzahlen auf, wodurch das Flurförderzeug eine Kurvenbahn beschreibt. Der Radius der Kurvenbahn wird hierbei von der Geschwindigkeitsdifferenz zwischen dem kurveninneren und dem kurvenäußeren Antriebrad 6, 7 bestimmt. Das Hinterrad 10 schwenkt um die senkrechte Drehachse 11 und steht tangential zur Kurvenbahn des Flurförderzeugs 1. Die Fahrmotoren 8, 9 können hierbei auch derart angesteuert werden, daß ein Antriebsrad vorwärts dreht und das andere Antriebsrad rückwärts. Dadurch ist es möglich, daß das Flurförderzeug 1 auf der Stelle drehen kann.

Die elektronische Steuereinrichtung 15 kann hierbei bei einer Betätgigung der Lenkeinrichtung 12 die Fahrmotoren 8, 9 ebenfalls in Abhängigkeit der Fahrgeschwindigkeit des Flurförderzeugs 1 ansteuern und somit die Fahrgeschwindigkeit des Flurförderzeugs 1 bei der Ansteuerung der Fahrmotoren 8, 9 während eines Lenkvorgangs berücksichtigen. Dadurch kann ein geschwindigkeitsabhängiges Verhalten des Lenkungssystems erreicht werden, so daß bei einer hohen Fahrgeschwindigkeit die von der Sensoreinrichtung 13 erfaßte Auslenkung der Lenkeinrichtung 12 eine geringere Drehzahldifferenz der Fahrmotoren 8, 9 und somit eine geringere Richtungsänderung des Flurförderzeugs 1 bewirkt. Zudem ist es möglich, maximale Drehzahldifferenzen der Fahrmotoren 8, 9 in Abhängigkeit der Fahrgeschwindigkeit vorzugeben, so daß bei einer hohen Fahrgeschwindigkeit ein Seitenumkippen des Flurförderzeugs 1 aufgrund einer zu großen Auslenkung der Lenkeinrichtung 12 und somit einer zu großen Richtungsänderung des Flurförderzeugs 1 verhindert wird. Durch die Berücksichtigung der Fahrgeschwindigkeit kann somit ebenfalls die Seitenstabilität des Flurförderzeugs 1 vor allem bei hohen Fahrgeschwindigkeiten erhöht werden.

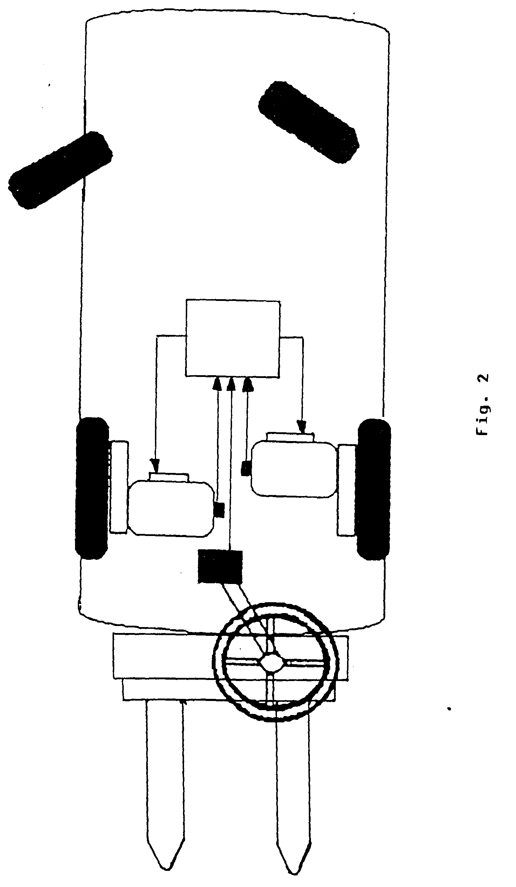

Das erfindungsgemäße Lenkungssystem kann bei einem Flurförderzeug in Dreiradbauweise eingesetzt werden. Ebenfalls ist die Verwendung in einem Flurförderzeug in Vierradbauweise gemäß der Figur 2 möglich. Bei einem derartigen Flurförderzeug 1 sind im lastfernen Bereich zwei voneinander beabstandete Hinterräder 10a, 10b vorgesehen, die jeweils um eine senkrechte Drehachse 11a, 11b drehbar am Fahrzeugrahmen 2 befestigt sind. Mit dem erfindungsgemäßen Lenkungssystem kann bei einem Flurförderzeug in Vierradausführung die Wendigkeit eines Flurförderzeugs in Dreiradbauweise mit der Stabilität eines Flurförderzeugs in Vierradbauweise verbunden werden.

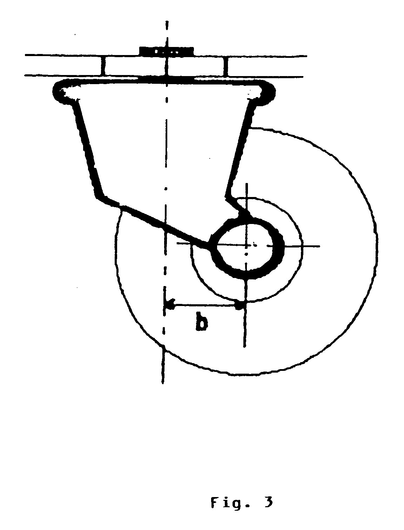

Die Anordnung des Hinterrads 10 am Fahrzeugrahmen 2 ist aus der Figur 3 ersichtlich. Die senkrechte Drehachse 11 des Hinterrads 10 ist hierbei von der horizontalen Rotationsachse 22 des Hinterrads 10 um das Maß b beabstandet, wobei die horizontale Rotationsachse 22 in Fahrtrichtung gesehen hinter der senkrechten Drehachse 11 angeordnet ist. Durch die Beabstandung der horizontalen Rotationsachse 22 kann das Hinterrad nachrollen und sich somit immer tangential zu der von den Fahrmotoren vorgegeben Kurvenbahn stellen.

## Patentansprüche

1. Lenkungssystem für ein Flurförderzeug, insbesondere einen Gabelstapler, mit zwei lastnahen Antriebsrädern, denen jeweils ein elektrischer Fahrmotor zugeordnet ist, und mindestens einem von den Antriebsrädern beabstandeten lastfernen Hinterrad, **dadurch gekennzeichnet**, daß das Hinterrad (10; 10a, 10b) um eine senkrechte Drehachse (11; 11a, 11b) frei drehbar gelagert ist und die Fahrmotoren (8, 9) unabhängig voneinander in Abhängigkeit der Auslenkung einer manuell betätigbaren Lenkeinrichtung (12) ansteuerbar sind.

2. Lenkungssystem nach Anspruch 1, dadurch gekennzeichnet, daß die Fahrmotoren (8, 9) in Abhängigkeit der Betätigungsgeschwindigkeit der manuell betätigbaren Lenkeinrichtung (12) ansteuerbar sind.

3. Lenkungssystem nach Anspruch 1 oder 2, dadurch gekennzeichnet, daß an der Lenkeinrichtung (12) eine Sensoreinrichtung (13) vorgesehen ist, die mit einer die Fahrmotoren (8, 9) ansteuernden elektronischen Steuereinrichtung (15) in Wirkverbindung steht.

4. Lenkungssystem nach Anspruch 3, dadurch gekennzeichnet, daß die Sensoreinrichtung (13) als Drehwinkelsensor ausgebildet ist.

5. Lenkungssystem nach einem der vorangegangenen Ansprüche, dadurch gekennzeichnet, daß eine weitere zur Erfassung der Drehzahl der Fahrmotoren (8, 9) geeignete Sensoreinrichtung (18, 19) vorgesehen ist, die mit der elektronischen Steuereinrichtung (15) in Verbindung steht.

6. Lenkungssystem nach Anspruch 5, wobei die Fahrmotoren (8, 9) als Asynchronmotoren ausgebildet sind, dadurch gekennzeichnet, daß die weitere Sensoreinrichtung (18, 19) als jeweils ein an einem Fahrmotor (8; 9) angeordneter Encoder ausgebildet ist.

7. Lenkungssystem nach Anspruch 1 und einem der Ansprüche 3 bis 6, dadurch gekennzeichnet, daß die elektronische Steuereinrichtung (15) als proportionale Steuerung ausgebildet ist.

8. Lenkungssystem nach einem der Ansprüche 2 bis 6, dadurch gekennzeichnet, daß die elektronische Steuereinrichtung (15) als derivative Steuerung ausgebildet ist.

9. Lenkungssystem nach einem der vorangegangenen Ansprüche, dadurch gekennzeichnet, daß die elektronische Steuereinrichtung (15) als in Abhängigkeit von der Fahrgeschwindigkeit des Flurförderzeugs (1) arbeitende Steuereinrichtung ausgebildet ist.

10. Lenkungssystem nach einem der vorangegangenen Ansprüche, dadurch gekennzeichnet, daß die senkrechte Drehachse (11; 11a, 11b) des Hinterrads (10; 10a, 10b) von der horizontalen Rotationsachse (22) des Hinterrads (10; 10a, 10b) axial beabstandet ist.

11. Verwendung eines Lenkungssystems nach einem der vorangegangenen Ansprüche in einem Flurförderzeug (1) in Dreiradausführung.

12. Verwendung eines Lenkungssystems nach einem der Ansprüche 1 bis 10 in einem Flurförderzeug (1) in Vierradausführung.
